# EUROPEAN PATENT APPLICATION

(11) **EP 3 764 027 A1**
(43) Date of publication of application: **13.01.2021**
(21) Application number: 19764649.0
(22) Date of filing: 26.02.2019
(51) Int. Cl.: F25B 49/02, C09K 5/04, F04B 49/10, F25B 1/00

(54) **REFRIGERATION CYCLE DEVICE**

(30) Priority: 05.03.2018 JP 2018038300
(71) Applicant: Panasonic Intellectual Property Management Co., Ltd., Osaka-shi, Osaka 540-6207 (JP)
(72) Inventor: SHIMIZU, Tsutomu, Osaka 540-6207 (JP); KARINO, Tsuyoshi, Osaka 540-6207 (JP); MUROZONO, Koji, Osaka 540-6207 (JP); SATO, Shigehiro, Osaka 540-6207 (JP); ITO, Kaname, Osaka 540-6207 (JP); HASHIMOTO, Takahiko, Osaka 540-6207 (JP); HIWATA, Akira, Osaka 540-6207 (JP)
(74) Representative: Eisenführ Speiser
(86) International application number: PCT/JP2019/007175
(87) International publication number: WO 2019/172008

(57) **Abstract**

Air conditioner (100) serving as a refrigeration cycle device includes protection device (200) that performs at least any one of stopping power supply to compressor 103 and lowering a rotation speed of compressor (103) in at least any one of cases: when a current value of an input current in a motor for compressor (103) exceeds a first predetermined value set to a value equal to or greater than three times as high as a maximum current value as of a time when compressor (103) is in normal operation except start-up; when the current value of the input current in the motor for compressor (103) exceeds a second predetermined value set to a value equal to or greater than twice as high as a current value as of a time when compressor (103) is started; and when a number of discharge electrons in a discharge space exceeds a third predetermined value set to a value equal to or greater than 1.0 × 10¹⁹/second, the number being calculated based on an amount of change in the current value of the input current in the motor for compressor (103).

## Description

### TECHNICAL FIELD

The present disclosure relates to a refrigeration cycle device including a working medium that contains an ethylene-based fluorohydrocarbon having a double bond.

### BACKGROUND ART

Generally, in a refrigeration cycle device, a compressor, a radiator or a condenser, a decompressor such as a capillary tube or an expansion valve, an evaporator, and the like are connected by pipes to form the refrigeration cycle circuit. In addition, a four-way valve is used as needed. Then, a cooling or heating action is exerted by circulating a working medium (refrigerant or heat medium) for refrigeration cycles through the refrigeration cycle circuit.

Known working media for refrigeration cycles in a refrigeration cycle device include halogenated hydrocarbons derived from methane or ethane, called chlorofluorocarbons (US ASHRAE 34 Standard stipulates that a chlorofluorocarbon should be denoted as Rxx or Rxxx, where xx and xxx are numbers; a chlorofluorocarbon is hereinafter denoted as Rxx or Rxxx).

R410A is often used as the above-described working medium for refrigeration cycles. However, the R410A refrigerant has a global warming potential (GWP) as high as 2090, and thus R410A is not desirable from the viewpoint of preventing global warming.

Therefore, from the viewpoint of preventing global warming, attention has been attracted to refrigerants having a lower GWP, such as HFO1123 (1,1,2-trifluoroethylene) and HFO1132 (1,2-difluoroethylene) (see, for example, PTL 1 or PTL 2).

However, HFO1123 (1,1,2-trifluoroethylene) and HFO1132 (1,2-difluoroethylene) are less stable than conventional refrigerants such as R410A. In addition, due to the lower stability, these refrigerants are more prone to undergo a self-decomposition reaction and a polymerization reaction that occurs following the self-decomposition reaction (hereinafter referred to as a disproportionation reaction). The disproportionation reaction in a narrower sense refers to a self-decomposition reaction only, and in a broader sense refers to a self-decomposition reaction and a polymerization reaction following the self-decomposition reaction.

When the disproportionation reaction occurs, the pressure of the refrigerant increases with a greater heat release. Thus, the reliability of the compressor or the refrigeration cycle device may be reduced. For this reason, in the case where HFO1123 or HFO1132 is used as a working refrigerant for a compressor or a refrigeration cycle device, the disproportionation reaction needs to be suppressed.

The disproportionation reaction occurs under an excessively high-temperature and high-pressure atmosphere (in a compressor, in particular), triggered by a starting point when higher energy is added to the refrigerant, or when an excessive collision between refrigerant molecules and electrons occurs due to electric discharge caused by a layer short or the like.

To give an example, the discharge pressure (the high-pressure side of the refrigeration cycle) becomes excessively high when the operating conditions become abnormal, that is, when the air blower fan on the condenser side stops or when the refrigeration cycle is blocked or otherwise fails.

Under such conditions, if a lockup failure occurs in the compressor and the power is continuously supplied to the compressor even under the lockup failure, the power is excessively supplied to the motor for the compressor to cause the motor to be abnormally heated. As a result, a discharge phenomenon called a layer short occurs between conductive wires in the stator windings included in the stator of the motor. Then, as the layer short serves as the source of high energy, part of a refrigerant component becomes radicals and the concentration of radicals rapidly rises, thereby inducing the disproportionation reaction. Alternatively, the disproportionation reaction is induced when the layer short (discharge phenomenon) causes an excessive collision between refrigerant molecules and electrons in the discharge space, part of a refrigerant component becomes radicals, and the concentration of radicals rapidly rises.

Then, when the disproportionation reaction occurs, it is possible that the pressure inside the compressor abnormally rises to reduce the reliability of the compressor or the refrigeration cycle device.

The present disclosure suppresses the occurrence of a disproportionation reaction by preventing addition of high energy to the refrigerant in the compressor or by preventing an excessive collision between refrigerant molecules and electrons in the discharge space. As a result, the present disclosure provides a more reliable refrigeration cycle device including a working medium that contains an ethylene-based fluorohydrocarbon having a double bond.

### Citation List

### Patent Literature

PTL 1: Japanese Patent No. 6192806
PTL 2: PCT International Publication No. WO 2012/157765

### SUMMARY OF THE INVENTION

A refrigeration cycle device of the present disclosure includes: a refrigeration cycle circuit including a compressor, a condenser, a decompressor, and an evaporator all of which are circularly connected to one another, the compressor including a motor; and a working medium that is sealed in the refrigeration cycle circuit and contains an ethylene-based fluorohydrocarbon having a double bond. The refrigeration cycle device further includes a protection device that performs at least any one of stopping power supply to the compressor and lowering a rotation speed of the compressor in at least one of cases: when a current value of an input current in the motor for the compressor exceeds a first predetermined value set to a value equal to or greater than three times as high as a maximum current value as of a time when the compressor is in normal operation except start-up; when the current value of the input current in the motor for the compressor exceeds a second predetermined value set to a value equal to or greater than twice as high as a current value as of a time when the compressor is started; and when a number of discharge electrons in a discharge space exceeds a third predetermined value set to a value equal to or greater than 1.0 × 10¹⁹/second, the number being calculated based on an amount of change in the current value of the input current in the motor for the compressor.

Such a configuration makes it possible to suppress a rapid increase in the concentration of radicals being generated and to effectively suppress the occurrence of a disproportionation reaction.

### BRIEF DESCRIPTION OF DRAWINGS

FIG. 1 is a diagram illustrating a schematic configuration of an air conditioner according to a first exemplary embodiment of the present disclosure.
FIG. 2 is a diagram illustrating a schematic configuration of a protection device for an air conditioner according to the first exemplary embodiment and a third exemplary embodiment of the present disclosure.
FIG. 3 is a diagram illustrating a waveform of a current in a motor as of the time when a disproportionation reaction occurs in a refrigeration cycle device according to the first exemplary embodiment and the third exemplary embodiment.
FIG. 4 is a diagram illustrating a relationship between the maximum current value as of the time of normal operation and occurrences of a disproportionation reaction in the air conditioner according to the first exemplary embodiment of the present disclosure.
FIG. 5 is a diagram illustrating a schematic configuration of a protection device in an air conditioner according to a second exemplary embodiment of the present disclosure.
FIG. 6 is a diagram illustrating a relationship between the starting current and occurrences of a disproportionation reaction in the air conditioner according to the first exemplary embodiment and the second exemplary embodiment of the present disclosure.
FIG. 7 is a diagram illustrating a relationship between a number of discharge electrons in a discharge space and occurrences of a disproportionation reaction in the air conditioner according to the third exemplary embodiment of the present disclosure.

### DESCRIPTION OF EMBODIMENTS

A refrigeration cycle device according to one aspect of the present disclosure includes: a refrigeration cycle circuit including a compressor, a condenser, a decompressor, and an evaporator all of which are circularly connected to one another, the compressor including a motor; and a working medium that is sealed in the refrigeration cycle circuit and contains an ethylene-based fluorohydrocarbon having a double bond. The refrigeration cycle device further includes a protection device that performs at least any one of stopping power supply to the compressor and lowering a rotation speed of the compressor in at least one of cases: when a current value of a current input to the motor for the compressor exceeds a first predetermined value set to a value equal to or greater than three times as high as a maximum current value as of a time when the compressor is in normal operation except start-up; when the current value of the input current in the motor for the compressor exceeds a second predetermined value set to a value equal to or greater than twice as high as a current value as of a time when the compressor is started; and when a number of discharge electrons in a discharge space exceeds a third predetermined value set to a value equal to or greater than 1.0 × 10¹⁹/second, the number being calculated based on an amount of change in the current value of the input current in the motor for the compressor.

Such a configuration makes it possible to suppress a rapid increase in the concentration of radicals being generated and to effectively suppress the occurrence of a disproportionation reaction.

In the refrigeration cycle device according to another aspect of the present disclosure, the protection device includes a current sensor and a shut-off device. Additionally, in one configuration, at least any one of stopping power supply to the compressor and lowering the rotation speed of the compressor may take place in less than one second from the time when the current value of the input current, as detected by the current sensor, in the motor for the compressor exceeds a first predetermined value or a second predetermined value.

With such a configuration, a sharp increase in the concentration of radicals generated by electric discharge can be suppressed, and thus the occurrence of a disproportionation reaction can be more reliably prevented.

In the refrigeration cycle device according to another aspect of the present disclosure, the protection device may include an electric current fuse that breaks in less than one second from the time when the current value of the input current in the compressor exceeds a first predetermined value or a second predetermined value.

With such a configuration, power supply to the compressor can be stopped by the electric current fuse, and therefore, the present disclosure can be applied to a compressor that does not have an electronic control circuit such as an inverter. Since power supply to the compressor can be stopped in less than one second from the time when the current value exceeds a predetermined value, a sharp increase in the concentration of radicals generated by electric discharge can be suppressed.

As a result, it is made possible to prevent the occurrence of a disproportionation reaction due to an increase in the concentration of radicals by the time when the power supply is stopped, and therefore, the occurrence of a disproportionation reaction can be more reliably prevented.

In the refrigeration cycle device according to another aspect of the present disclosure, the aforementioned current sensor may include a current transformer.

As a result, the protection device is allowed to have a simpler configuration.

In the refrigeration cycle device according to another aspect of the present disclosure, the aforementioned compressor may be of a capacity-fixed type.

With such configuration, even in a case where the refrigeration cycle device does not have a function of stopping power supply to the compressor by means of electronic control, the occurrence of a disproportionation reaction can be prevented.

With reference to the drawings, exemplary embodiments of the present disclosure will now be described by using examples in which the present disclosure is applied to an air conditioner. Note that the present disclosure is not limited to these exemplary embodiments.

### (First exemplary embodiment)

### [1-1. Overall configuration]

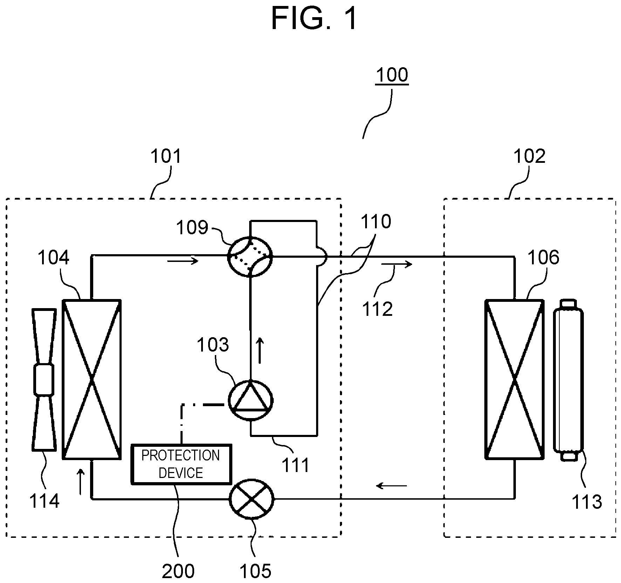

FIG. 1 is a diagram illustrating a schematic configuration of an air conditioner according to a first exemplary embodiment of the present disclosure.

In the present exemplary embodiment, air conditioner 100 is described as an example of a refrigeration cycle device.

As illustrated in FIG. 1, air conditioner 100 includes outdoor unit 101 and indoor unit 102. Outdoor unit 101 and indoor unit 102 are connected by connection pipe 110.

Outdoor unit 101 includes compressor 103, outdoor heat exchanger 104 (a condenser or an evaporator), and expander 105. Indoor unit 102 includes indoor heat exchanger 106 (an evaporator or a condenser).

Outdoor heat exchanger 104 in outdoor unit 101 and indoor heat exchanger 106 in indoor unit 102 are circularly connected by connection pipe 110. In this way, a refrigeration cycle circuit is formed. Specifically, compressor 103, indoor heat exchanger 106 in indoor unit 102, expander 105 as a decompressor, and outdoor heat exchanger 104 in outdoor unit 101 are circularly connected in this order by connection pipe 110, whereby the refrigeration cycle circuit is formed.

In addition, four-way valve 109 for switching between cooling and heating is disposed on connection pipe 110 that connects compressor 103, outdoor heat exchanger 104, and indoor heat exchanger 106. Note that outdoor unit 101 includes air blower 114, an accumulator (not illustrated), a temperature sensor, and so on. In addition, indoor unit 102 includes air blower fan 113, a temperature sensor (not illustrated), an operation unit, and so on.

Indoor heat exchanger 106 in indoor unit 102 exchanges heat between the indoor air taken into indoor unit 102 by air blower fan 113 and the refrigerant (the working medium for refrigeration cycles) flowing inside indoor heat exchanger 106.

During heating, indoor unit 102 blows the air warmed through the heat exchange in indoor heat exchanger 106 into the interior. During cooling, indoor unit 102 blows the air cooled through the heat exchange in indoor heat exchanger 106 into the interior.

Outdoor heat exchanger 104 included in outdoor unit 101 exchanges heat between the external air taken into outdoor unit 101 by air blower 114 and the refrigerant flowing inside outdoor heat exchanger 104.

The working medium (refrigerant) containing an ethylene-based fluorohydrocarbon having a double bond is sealed in the refrigeration cycle circuit. In the present exemplary embodiment, the working medium containing HFO1123 (1,1,2-trifluoroethylene) as an example is sealed in the refrigeration cycle circuit. Compressor 103 compresses the working medium (refrigerant) and circulates the refrigerant through the refrigeration cycle circuit. In the present exemplary embodiment, compressor 103 is a so-called hermetic compressor and a lubricating oil is sealed in compressor 103.

As described above, the aforementioned working medium may undergo a disproportionation reaction when external energy is supplied due to a layer short occurring under high-temperature and high-pressure conditions.

Note that specific configurations of indoor unit 102, outdoor unit 101, indoor heat exchanger 106, outdoor heat exchanger 104, compressor 103, expander 105, four-way valve 109, air blower fan 113, and air blower 114 described above are not particularly limited, and any known configuration can be suitably used. In addition, air conditioner 100 may include a temperature sensor, an operation unit, an accumulator, other valve devices, a strainer, and so on, which are not illustrated. In this case, specific configurations of these components are not particularly limited, and any known configuration can be suitably used.

### [1-2. Protection device]

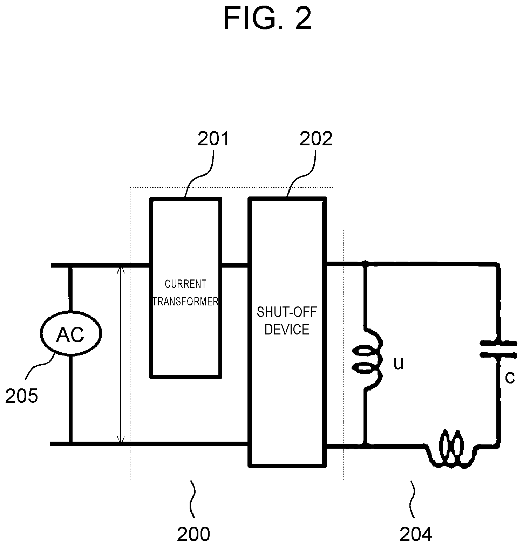

In the present exemplary embodiment, protection device 200 is disposed in air conditioner 100 in order to prevent the occurrence of a layer short. Protection device 200 has a configuration that is illustrated in FIG. 2 and described below. When the current for driving motor 204 becomes equal to or greater than a predetermined value, protection device 200 shuts off the current suppled to motor 204.

FIG. 2 is a diagram illustrating a schematic configuration of the protection device for the air conditioner according to the first exemplary embodiment and a third exemplary embodiment of the present disclosure.

As illustrated in FIG. 2, protection device 200 includes current transformer 201 serving as a current sensor to detect a current value, and shut-off device 202 such as a relay or an electronic circuit. In the present exemplary embodiment, the current transformer is used as an example of the current sensor. The current sensor may be any sensor, such as a Hall sensor, capable of directly or indirectly detecting the current value of the current input to the motor for compressor 103.

Shut-off device 202 is connected between power supply 205 and motor 204 for compressor 103. Motor 204 is configured to be controlled by an electronic control circuit such as an inverter circuit (not illustrated).

When the current value detected by current transformer 201 exceeds a predetermined current value, power supply to the compressor is stopped. With this configuration, disproportionation reactions are avoided.

### [1-3. Operation]

The following describes operations of air conditioner 100 configured as described above.

First, basic operations of the air conditioner are briefly described.

With reference to FIG. 1, refrigerant flow 112 indicates the direction of the refrigerant during the heating operation.

During the heating operation, the gas refrigerant compressed and discharged by compressor 103 is sent to indoor heat exchanger 106 in indoor unit 102 via four-way valve 109. Through heat exchange between the gas refrigerant and the indoor air in indoor heat exchanger 106, the gas refrigerant is condensed to be liquefied. The liquefied liquid refrigerant is decompressed by expander 105 to become a gas-liquid two-phase refrigerant, and is sent to outdoor heat exchanger 104 in outdoor unit 101. In outdoor heat exchanger 104, through heat exchange between the external air and the gas-liquid two-phase refrigerant, the gas-liquid two-phase refrigerant evaporates to become a gas refrigerant, and returns to compressor 103. Compressor 103 compresses the gas refrigerant, and the refrigerant discharged from compressor 103 is sent again to indoor heat exchanger 106 in indoor unit 102 via four-way valve 109.

During the cooling operation and the dehumidifying operation, the gas refrigerant compressed and discharged by compressor 103 in outdoor unit 101 is sent to outdoor heat exchanger 104 in outdoor unit 101 via four-way valve 109. In outdoor heat exchanger 104, the gas refrigerant is condensed to be liquefied through heat exchange between the external air and the gas refrigerant. The liquefied liquid refrigerant is decompressed by expander 105 and sent to indoor heat exchanger 106 in indoor unit 102. In indoor heat exchanger 106, the liquid refrigerant evaporates to become a gas refrigerant through heat exchange between the indoor air and the liquid refrigerant. The gas refrigerant goes through four-way valve 109 and suction pipe 111 to return to compressor 103 in outdoor unit 101. Compressor 103 compresses the gas refrigerant, and the refrigerant discharged from compressor 103 is sent again to outdoor heat exchanger 104 via four-way valve 109.

The following describes operations of protection device 200.

During the operation of air conditioner 100 as described above, when the operating conditions become abnormal, that is, when air blower fan 113 on the condenser side is stopped or the refrigeration cycle device is blocked or otherwise fails as described above, the pressure on the high-pressure side in the refrigeration cycle circuit rises excessively. In conjunction with this, the temperature inside compressor 103 also rises significantly. As a result, the refrigerant is more likely to undergo a disproportionation reaction. That is, when the temperature and the pressure, which are dominant factors of the disproportionation reaction, rise to cause motor 204 to be abnormally heated while the power is continuously supplied to motor 204, a phenomenon called a layer short occurs. The layer short is a phenomenon in which conductive wires in the stator windings included in the stator of motor 204 are short-circuited due to deterioration of the winding insulating material. Then, the layer short, which is the source of high energy, leads to an increase in the concentration of radicals generated by the radical reaction in the refrigerant, with the result that a disproportionation reaction is more likely to be induced in the refrigerant.

Here, in the present exemplary embodiment, protection device 200 stops power supply to compressor 103 when the current value of the current supplied to motor 204 exceeds a predetermined current value under abnormal operating conditions as described above. Note that the predetermined current value is a current value as of a time before the disproportionation reaction is induced in the refrigerant. As a result, the occurrence of a disproportionation reaction in the refrigerant can be avoided.

The following describes the aforementioned predetermined current value more specifically.

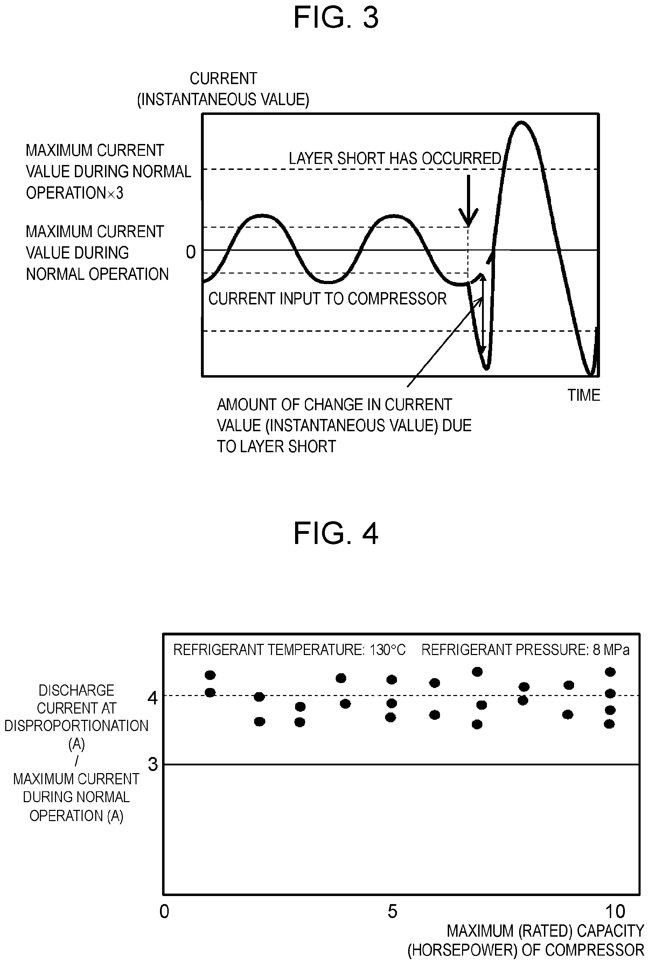

FIG. 3 is a diagram illustrating a waveform of a current in the motor as of the time when a disproportionation reaction occurs in the refrigeration cycle device according to the first exemplary embodiment and the third exemplary embodiment.

The aforementioned predetermined current value (a first predetermined value) is set to a current value as of a time before the current input to compressor 103 reaches the current value causing a layer short. Note that the layer short in this case refers to a layer short that may cause a disproportionation reaction in the refrigerant under high-temperature and high-pressure conditions under which a disproportionation reaction is likely to occur.

FIG. 4 is a diagram illustrating a relationship between the maximum current value as of the time of normal operation and occurrences of a disproportionation reaction in the air conditioner according to the first exemplary embodiment of the present disclosure.

FIG. 4 shows a state in which disproportionation reactions occur at an upper limit temperature of 130°C and an upper limit pressure of 8 MPa, which are thresholds at which a disproportionation reaction in the refrigerant starts to occur in actual air conditioner 100. The horizontal axis in FIG. 4 indicates the capacity (horsepower) of compressor 103. The vertical axis in FIG. 4 indicates the ratio of the current value as of the time when a disproportionation reaction occurs to the maximum current value as of the time of normal operation of compressor 103 except start-up.

As shown in FIG. 4, experiments conducted by the inventors of the present invention have revealed that disproportionation reactions occur at a current value greater than three times as high as the maximum current value as of the time of normal operation except start-up.

Therefore, in the present exemplary embodiment, regarding current values of the current input to compressor 103, the predetermined current value (a first predetermined value) is set to a certain value equal to or greater than three times as high as the maximum current value as of the time of normal operation of compressor 103 except start-up.

Note that, in the present exemplary embodiment, protection device 200 is configured to stop power supply to motor 204 in less than one second, preferably in less than 0.5 seconds, and more preferably in less than 0.1 second from the time when the current value exceeds the first predetermined value. A layer short may occur by the time when a period of one second or longer has passed after the current value exceeds the first predetermined value. Then, the energy caused by the layer short (quantity of electrons released by the layer short) will exceed a threshold at which disproportionation reactions can be suppressed, and thus a disproportionation reaction will be induced. However, by stopping power supply in less than one second from the time when the current value exceeds the first predetermined value as in the present exemplary embodiment, disproportionation reactions can be more reliably prevented from being induced. That is, having a configuration in which power supply to motor 204 is to be stopped in less than one second ensures that the effect of suppressing disproportionation reactions is exerted.

Protection device 200 may be of a reversible operation type, which means protection device 200 is configured to return to the original state, that is, to resume power supply after stopping power supply to motor 204, or may be of an irreversible operation type. Note that it is preferable to use protection device 200 of an irreversible operation type, which means protection device 200, once activated, does not return to the original state but continues preventing the power from being supplied.

In the case where protection device 200 of a reversible operation type is used, it is preferable to assign two different values, which are higher and lower values (a first current value and a second current value lower than the first current value) to the current value at which power supply is to be stopped. In this case, when the current input to compressor 103 reaches the lower current value (the first current value), the power is allowed to be supplied to compressor 103 again if the current value subsequently drops. Then, when the current input to compressor 103 reaches the higher current value (the second current value), it is preferable to perform an irreversible operation by which power supply is stopped without being resumed regardless of whether the current value subsequently drops.

With such a configuration, when the current value instantaneously rises for some reason, the instantaneous current value is detected to stop power supply, and then the power supply is resumed if the current value is likely to return to the original state, whereby the compressor is allowed to keep on running. Therefore, a more convenient-to-use refrigeration cycle device can be provided.

Note that, in general, a refrigeration cycle device of this type is equipped with a safety device that detects an overcurrent (for example, a current value about 1.5 times as high as the maximum current value as of the time when compressor 103 is in normal operation except start-up) flowing through motor 204 for compressor 103 to stop the operation of compressor 103. Protection device 200 disclosed in the present exemplary embodiment is disposed separately from such a safety device. Therefore, in the case where such a conventional safety device is disposed, even when the safety device fails to work properly, protection device 200 is activated so that the occurrence of a disproportionation reaction in the refrigerant can be prevented.

In the present exemplary embodiment, protection device 200 stops power supply to compressor 103 when the current supplied to motor 204 exceeds a predetermined current value (a first predetermined value) as of a time before a disproportionation reaction is induced. However, protection device 200 can also avoid the occurrence of a disproportionation reaction in the refrigerant by lowering the rotation speed of compressor 103 through the use of an electronic control circuit such as an inverter circuit that controls the rotation speed of compressor 103. That is, protection device 200 can avoid the occurrence of a disproportionation reaction in the refrigerant by performing at least any one of stopping power supply to compressor 103 and lowering the rotation speed of compressor 103.

### (Second exemplary embodiment)

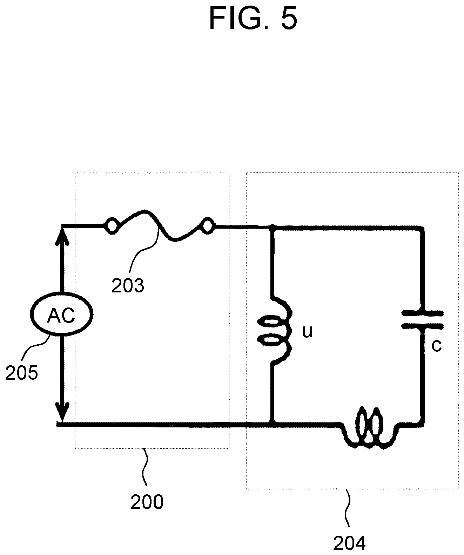

FIG. 5 is a diagram illustrating a schematic configuration of a protection device in the air conditioner according to a second exemplary embodiment.

As shown in FIG. 5, in the present exemplary embodiment, protection device 200 includes electric current fuse 203. The configuration except the electric current fuse is the same as in the first exemplary embodiment, and thus descriptions of the configuration are omitted.

Electric current fuse 203 is configured to stop power supply to compressor 103 when the detected current value exceeds a predetermined current value (a first predetermined value) set to a certain value equal to or greater than three times as high as the maximum current value as of a time when compressor 103 is in normal operation except start-up.

Furthermore, electric current fuse 203 is configured to stop power supply to motor 204 in less than one second, preferably in less than 0.5 seconds, and more preferably in less than 0.1 second from the time when the current value exceeds the first predetermined value.

According to the present exemplary embodiment, the occurrence of a disproportionation reaction in the refrigerant can be reliably prevented as in the first exemplary embodiment by using electric current fuse 203, which is inexpensive, disposed in protection device 200. Therefore, protection device 200 of the present exemplary embodiment is suitable for a compressor without an electronic control circuit that has a function of detecting a current, that is, a capacity-fixed compressor such as a constant-speed compressor.

Electric current fuse 203 is configured to stop power supply in less than one second from the time when the current value exceeds a first predetermined value. Therefore, the occurrence of a disproportionation reaction can be reliably prevented.

In general, an electric current fuse is blown (broken) to shut off a current when the current value remains higher than a threshold for a predetermined time period (for example, about several tens of seconds to several minutes). Accordingly, a layer short may occur before the current is shut off and, if the layer short persists, some energy enough to cause a disproportionation reaction is released. As a result, it is highly likely that the occurrence of the disproportionation reaction cannot be prevented.

However, in the present exemplary embodiment, electric current fuse 203 is configured to be blown in less than one second as described above. Therefore, it is made possible to prevent a layer short from occurring before the electric current fuse is blown, so that the occurrence of the disproportionation reaction can be more reliably prevented.

Note that protection device 200 in the first exemplary embodiment and the second exemplary embodiment is configured to stop power supply to compressor 103 when the current value exceeds a predetermined current value (a first predetermined value) set to a certain value equal to or greater than three times as high as the maximum current value as of a time when compressor 103 is in normal operation.

However, protection device 200 may also be configured to stop power supply to compressor 103 when the current value exceeds a predetermined current value (a second predetermined value) set to a certain value equal to or greater than twice as high as the starting current value of compressor 103.

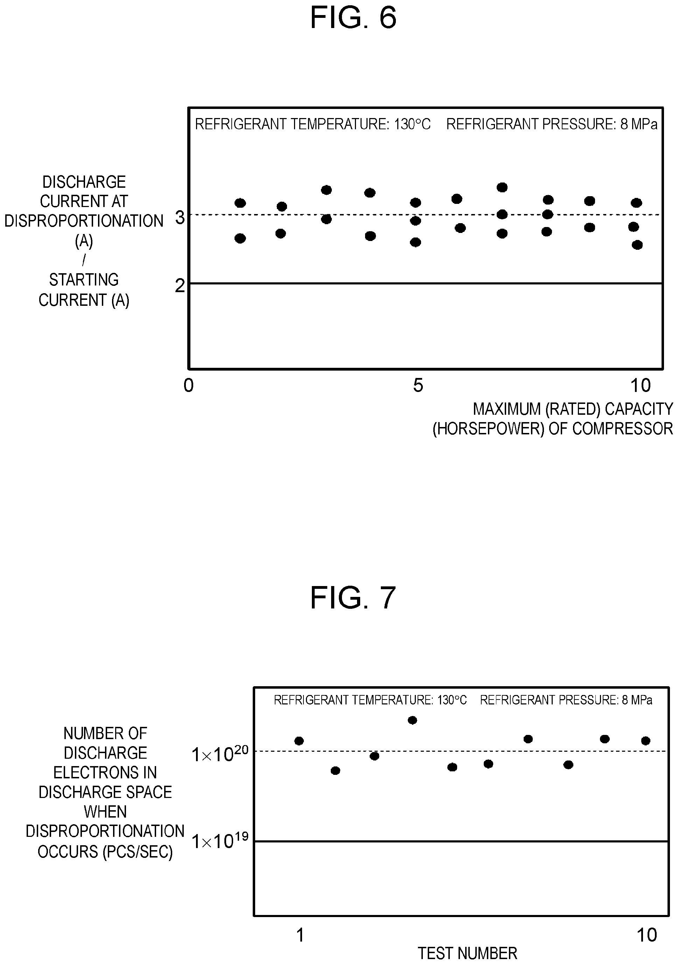

FIG. 6 is a diagram illustrating a relationship between the starting current and occurrences of a disproportionation reaction in the air conditioner according to the first exemplary embodiment and the second exemplary embodiment of the present disclosure. FIG. 6 represents observations of the occurrence of disproportionation reactions with respect to the starting current value of compressor 103, the observations being made under the same conditions as in FIG. 4.

As shown in FIG. 6, disproportionation reactions occur when the current value is greater than twice as high as the starting current value of compressor 103. Therefore, in the case where a predetermined current value (a second predetermined value) equal to or greater than twice as high as the starting current value of compressor 103 is assigned to the current value at which power supply to compressor 103 is to be stopped, the occurrence of a disproportionation reaction in the refrigerant can also be prevented.

As described above, protection device 200 of the present disclosure is merely needed to be configured to stop power supply to compressor 103 when the value of a current input to compressor 103 exceeds at least any one of a predetermined current value (a first predetermined value) set to a value equal to or greater than three times as high as the maximum current value as of a time when compressor 103 is in normal operation except start-up and a predetermined current value (a second predetermined value) set to a value equal to or greater than twice as high as the starting current value of compressor 103.

Furthermore, protection device 200 may have a configuration in which electric current fuse 203 described in the present exemplary embodiment and current transformer 201 and shut-off device 202 described in the first exemplary embodiment are all provided in combination. Note that, in this case, another current detection means may be used instead of current transformer 201.

As a result, a configuration for doubly stopping power supply is provided, where the current supply to compressor 103 is reduced or stopped through electronic control and the current supply to compressor 103 is also stopped by a break of electric current fuse 203, so that the occurrence of a disproportionation reaction can be more reliably avoided.

### (Third exemplary embodiment)

In the present exemplary embodiment, another example of conditions under which at least any one of stopping power supply to compressor 103 and lowering the rotation speed of compressor 103 is performed by protection device 200 will be described. The configuration except these conditions is the same as in the first exemplary embodiment and the second exemplary embodiment, and thus descriptions of the configuration are partly omitted.

In the present exemplary embodiment, a working medium (refrigerant) containing an ethylene-based fluorohydrocarbon having a double bond is sealed in the refrigeration cycle circuit, as in the first exemplary embodiment. Examples of the refrigerant include a working medium containing HFO1123 (1,1,2-trifluoroethylene). As described above, a disproportionation reaction will occur in the working medium when a layer short occurs under high-temperature and high-pressure conditions to cause an excessive collision between refrigerant molecules and discharge electrons.

As illustrated in FIG. 2, protection device 200 includes, for example, current transformer 201 that detects a current value, and shut-off device 202 such as a relay or an electronic circuit. Protection device 200 detects the value (instantaneous value) of a current input to compressor 103 by using an electronic control circuit (not illustrated) and, if a number of discharge electrons in the discharge space as calculated based on the amount of change in the current value (instantaneous value) is greater than 1.0 × 10¹⁹/second, protection device 200 stops power supply to compressor 103. The number of discharge electrons corresponds to the amount of energy causing a layer short. In this way, it is made possible to prevent the occurrence of a layer short and avoid the occurrence of a disproportionation reaction.

During the operation of air conditioner 100, when the operating conditions become abnormal, that is, when air blower fan 113 on the condenser side is stopped or the refrigeration cycle device is blocked or otherwise fails as described above, the pressure on the high-pressure side in the refrigeration cycle circuit rises excessively. In conjunction with this, the temperature inside compressor 103 also rises significantly. As a result, the refrigerant is more likely to undergo a disproportionation reaction. That is, when the temperature and the pressure, which are dominant factors of the disproportionation reaction, rise to cause motor 204 to be abnormally heated while the power is continuously supplied to motor 204, a phenomenon called a layer short occurs. The layer short is a phenomenon in which conductive wires in the stator windings included in the stator of motor 204 are short-circuited due to deterioration of the winding insulating material. Then, the layer short causes an excessive collision between refrigerant molecules and electrons. This results in an increase in the concentration of radicals generated by the radical reaction in the refrigerant, making it more likely that a disproportionation reaction is induced in the refrigerant.

However, in the present exemplary embodiment, the value (instantaneous value) of a current input to motor 204 under abnormal operating conditions as described above is detected by an electronic control circuit such as an inverter circuit (not illustrated). Then, if the number of discharge electrons in the discharge space as calculated from the amount of change in the current value (instantaneous value) is greater than a predetermined value (a third predetermined value), power supply to compressor is stopped. As a result, disproportionation reactions in the refrigerant can be avoided.

In the present exemplary embodiment, protection device 200 stops power supply to motor 204 when a predetermined amount of change in the current value (instantaneous value) is detected, the amount of change corresponding to the number of discharge electrons in the discharge space equal to or greater than 1.0 × 10¹⁹/second as calculated from the amount of change in the value (instantaneous value) of a current input to compressor 103. The aforementioned predetermined amount of change in the current value (instantaneous value) corresponds to the number of discharge electrons that is not yet high enough to cause a layer short, which in turns may cause a disproportionation reaction to occur in the refrigerant under high-temperature and high-pressure conditions under which the disproportionation reaction is likely to occur in the refrigerant.

FIG. 7 is a diagram illustrating a relationship between the number of discharge electrons in the discharge space and occurrences of a disproportionation reaction in the air conditioner according to the third exemplary embodiment of the present disclosure. FIG. 7 shows a state in which disproportionation reactions occur at an upper limit temperature of 130°C and an upper limit pressure of 8 MPa, which are thresholds at which a disproportionation reaction in the refrigerant starts to occur in actual air conditioner 100. The horizontal axis in FIG. 7 represents a test number, and the vertical axis in FIG. 7 represents the number of discharge electrons present in the discharge space when a disproportionation occurs.

As apparent from FIG. 7, disproportionation reactions occur when the number of discharge electrons in the discharge space is greater than 1.0 × 10¹⁹/second. Note that the amount of change in the current value (instantaneous value) caused by a layer short is, as illustrated in FIG. 3, the difference between the current value (instantaneous value) as of a time when no layer short has occurred and the current value (instantaneous value) as of the time when a layer short has occurred. In addition, the number of discharge electrons (per second) in the discharge space is obtained by dividing the amount of change (amperes) in the current value (instantaneous value) caused by a layer short by the elementary charge (1.6 × 10¹⁹ coulombs). Accordingly, the amount of change in the current value (instantaneous value) corresponding to the number of discharge electrons of 1.0 × 10¹⁹/second in the discharge space is 1.6 A.

As shown in FIG. 7, experiments conducted by the inventors of the present invention have revealed that disproportionation reactions occur when the number of discharge electrons in the discharge space as calculated from the amount of change in the value (instantaneous value) of a current input to compressor 103 is greater than 1.0 × 10¹⁹/second.

Therefore, protection device 200 stops power supply to compressor 103 when the number of discharge electrons in the discharge space exceeds a third predetermined value (1.0 × 10¹⁹/second, for example) that is set to a value equal to or greater than 1.0 × 10¹⁹/second. That is, protection device 200 stops power supply to compressor 103 upon detection of the amount of change in the current value (instantaneous value) corresponding to the number of discharge electrons of 1.0 × 10¹⁹/second in the discharge space.

Note that, in the present exemplary embodiment, protection device 200 stops power supply to compressor 103 when the current supplied to motor 204 exceeds a predetermined current value as of a time before a disproportionation reaction is induced. However, the occurrence of a disproportionation reaction in the refrigerant can also be avoided by lowering the rotation speed of compressor 103 through the use of an electronic control circuit such as an inverter circuit that controls compressor 103. That is, protection device 200 can avoid the occurrence of a disproportionation reaction in the refrigerant by at least any one of stopping power supply to compressor 103 and lowering the rotation speed of compressor 103.

### (Fourth exemplary embodiment)

In the present exemplary embodiment, a disproportionation inhibitor that suppresses a disproportionation reaction is added to the working medium in compressor 103 so as to prevent the occurrence of a disproportionation reaction more reliably.

The configuration except such an inhibitor is the same as in the first to third exemplary embodiments, and thus descriptions of the configuration are omitted.

As a result of intensive studies, the inventors of the present invention found that main active radicals that induced a disproportionation reaction of 1,1,2-trifluoroethylene, which was used as a working medium for air conditioner 100, included radicals such as fluorine radicals (F radicals), trifluoromethyl radicals (CF₃ radicals), and difluoromethylene radicals (CF₂ radicals).

Therefore, in the present exemplary embodiment, a substance (disproportionation inhibitor) capable of efficiently capturing radicals including F radicals, CF₃ radicals, and CF₂ radicals is added to the working medium.

For example, the aforementioned disproportionation inhibitor is a haloethane having a structure represented by the following formula (1) (except the case where X consists of F only):

C₂HₘXₙ (1)

where X in the formula (1) is a halogen atom selected from the group consisting of F, Cl, Br, and I; m is 0 or an integer equal to or greater than 1, and n is an integer equal to or greater than 1; and the sum of m and n is 6. When n is equal to or greater than 2, X is a halogen atom of the same type or different types.

In the present exemplary embodiment, the aforementioned disproportionation inhibitor is added to the refrigerant component containing 1,1,2-trifluoroethylene, whereby the haloethane represented by the formula (1) satisfactorily captures radicals causing chain-branching reactions of disproportionation reactions, such as fluorine radicals, fluoromethyl radicals, and fluoromethylene radicals.

As a result, it is made possible to effectively suppress the occurrence of a disproportionation reaction of 1,1,2-trifluoroethylene and alleviate rapid progress of a disproportionation reaction. Therefore, the reliability of air conditioner 100 (refrigeration cycle device) including the working medium can be further improved.

That is, protection device 200 and a disproportionation inhibitor secure safety in multiple ways. Therefore, since the occurrence of a disproportionation reaction can be more reliably prevented, the reliability of air conditioner 100 can be improved with greater safety.

In addition, examples of the disproportionation inhibitor that suppresses a disproportionation reaction may further include an inhibitor described below.

That is, such a disproportionation inhibitor includes a saturated hydrocarbon having 2 to 5 carbon atoms and a haloalkane having 1 or 2 carbon atoms except the case where all the halogen atoms are fluorine.

The saturated hydrocarbon and the haloalkane in the disproportionation inhibitor satisfactorily capture radicals generated by a disproportionation reaction of 1,1,2-trifluoroethylene, such as fluorine radicals, fluoromethyl radicals, and fluoromethylene radicals. As a result, it is made possible to effectively suppress the occurrence of a disproportionation reaction of 1,1,2-trifluoroethylene and alleviate rapid progress of a disproportionation reaction. Moreover, compared with the case where a saturated hydrocarbon is solely used or the case where a haloalkane is solely used, suppression of the occurrence of a disproportionation reaction or alleviation of progress of a disproportionation reaction can be achieved with a relatively small amount of the disproportionation inhibitor to be added. Therefore, the reliability of air conditioner 100 (refrigeration cycle device) including the working medium can be further improved.

Although specific types of compressor 103 are not shown in each of the exemplary embodiments above, compressor 103 may be any of, for example, positive displacement compressors including a rotary compressor, a scroll compressor, and a reciprocating compressor, or a centrifugal compressor or the like. Furthermore, the compressor to be used may be either of a capacity-fixed type or of a capacity-variable type.

Moreover, in the present exemplary embodiment, descriptions are provided by taking the working medium containing HFO1123 as an example, but the working medium is not limited thereto. That is, any working refrigerant may be used to obtain effects similar to the effects of the working medium containing HFO1123, as long as the working refrigerant contains an ethylene-based fluorohydrocarbon having a double bond. Examples of an ethylene-based fluorohydrocarbon having a double bond include HFO1132 as well as HFO1123.

In the present exemplary embodiment, air conditioner 100 is described as an example of the refrigeration cycle device. However, the refrigeration cycle device of the present disclosure is not limited to the air conditioner, but may be any refrigeration cycle device in which components such as a compressor, a condenser, a decompressor, and an evaporator are connected by pipes. Other examples of the refrigeration cycle device may include, for example, a refrigerator (for home or business use), a dehumidifier, a showcase, an ice machine, a heat-pump type water heater, a heat-pump type laundry and drier machine, and a vending machine.

### INDUSTRIAL APPLICABILITY

The present disclosure can improve the reliability of a refrigeration cycle device including a working medium that contains HFO1123 or the like. Therefore, the present disclosure can be widely applied to various refrigeration cycle devices such as air conditioners for home or business use, car air conditioners, water heaters, refrigerator-freezers, showcases, and dehumidifiers.

### REFERENCE MARKS IN THE DRAWINGS

- 100:: air conditioner
- 101:: outdoor unit
- 102:: indoor unit
- 103:: compressor
- 104:: outdoor heat exchanger
- 105:: expander (decompressor)
- 106:: indoor heat exchanger
- 109:: four-way valve
- 110:: connection pipe
- 111:: suction pipe
- 112:: refrigerant flow
- 113:: air blower fan
- 114:: air blower
- 200:: protection device
- 201:: current transformer (current sensor)
- 202:: shut-off device
- 203:: electric current fuse
- 204:: motor
- 205:: power supply

## Claims

1. A refrigeration cycle device comprising:
a refrigeration cycle circuit including a compressor, a condenser, a decompressor, and an evaporator all of which are circularly connected to one another, the compressor including a motor;
a working medium that is sealed in the refrigeration cycle circuit and contains an ethylene-based fluorohydrocarbon having a double bond; and
a protection device that performs at least any one of stopping power supply to the compressor and lowering a rotation speed of the compressor in at least any one of cases:
when a current value of an input current in the motor for the compressor exceeds a first predetermined value set to a value equal to or greater than three times as high as a maximum current value as of a time when the compressor is in normal operation except start-up;
when the current value of the input current in the motor for the compressor exceeds a second predetermined value set to a value equal to or greater than twice as high as a current value as of a time when the compressor is started; and
when a number of discharge electrons in a discharge space exceeds a third predetermined value set to a value equal to or greater than 1.0 × 10¹⁹/second, the number being calculated based on an amount of change in the current value of the input current in the motor for the compressor.

2. The refrigeration cycle device according to claim 1, wherein
the protection device includes a current sensor and a shut-off device, and
the protection device performs at least any one of stopping power supply to the compressor and lowering the rotation speed of the compressor in less than one second from a time when the current value of the input current in the motor for the compressor exceeds the first predetermined value or the second predetermined value, the current value being detected by the current sensor.

3. The refrigeration cycle device according to claim 1 or 2, wherein
the protection device includes an electric current fuse that breaks in less than one second from the time when the current value of the input current in the compressor exceeds the first predetermined value or the second predetermined value.

4. The refrigeration cycle device according to any one of claims 1 to 3, wherein the current sensor includes a current transformer.

5. The refrigeration cycle device according to any one of claims 1 to 4, wherein the compressor is of a capacity-fixed type.
